(19) Europäisches Patentamt
European Patent Office
Office européen des brevets

(11) EP 0 871 031 A2

(12) **EUROPÄISCHE PATENTANMELDUNG**

(43) Veröffentlichungstag:
**14.10.1998 Patentblatt 1998/42**

(51) Int. Cl.[6]: **G01N 27/407**

(21) Anmeldenummer: **98103681.7**

(22) Anmeldetag: **03.03.1998**

(84) Benannte Vertragsstaaten:
**AT BE CH DE DK ES FI FR GB GR IE IT LI LU MC NL PT SE**
Benannte Erstreckungsstaaten:
**AL LT LV MK RO SI**

(30) Priorität: **08.04.1997 DE 19714364**

(71) Anmelder: **DORNIER GmbH**
**88039 Friedrichshafen (DE)**

(72) Erfinder:
- **Plog, Carsten, Dr.**
  **88677 Markdorf (DE)**
- **Maunz, Werner**
  **88677 Markdorf (DE)**
- **Müller, Ralf**
  **88326 Aulendorf (DE)**
- **Schäfer, Wolfgang, Dr.**
  **88048 Friedrichshafen (DE)**
- **Kayser, Armin**
  **88709 Meersburg (DE)**
- **Moos, Ralf, Dr.**
  **88048 Friedrichshafen (DE)**
- **Flesch, Udo, Dr.**
  **45309 Essen (DE)**
- **Simon, Ulrich, Dr.**
  **45141 Essen (DE)**

(74) Vertreter: **Meel, Thomas**
**Dornier GmbH**
**L H G**
**88039 Friedrichshafen (DE)**

(54) **Verfahren zum NO-Nachweis in fluiden Medien**

(57) Die Erfindung betrifft ein Verfahren zum selektiven Nachweis von NO in fluiden Medien, insbesondere Abgasen von Verbrennungsmotoren. Es weist folgende Verfahrensschritte auf:

- Positionieren eines nitrosonium-leitenden Festelektrolyten zwischen zwei porösen Elektroden,
- unmittelbare Beaufschlagung einer der beiden Elektroden mit dem NO-haltigen fluiden Medium,
- Messen der Spannungsdifferenz zwischen den beiden Elektroden, die ein Maß für die NO-Konzentration in dem NO-haltigen fluiden Medium ist.

Fig. 1

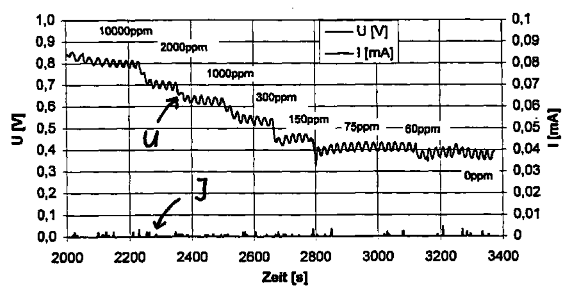


EP 0 871 031 A2

## Beschreibung

Die Erfindung betrifft ein Verfahren zum Nachweis von Stickoxid (NO) in fluiden Medien.

Für die Entstickung von dieselmotorischen Abgasen sind mehrere Methoden bekannt.

Einmal kann eine katalytische Entstickung unter Verwendung von Ammoniak oder Kohlenwasserstoffen als Reduktionsmittel durchgeführt werden. Zum anderen können Adsorberkatalysatoren die Entstickung durch Adsorption von $NO_x$ ermöglichen, die in regelmäßigen, kurzen Abständen durch Verwendung ebenfalls von Reduktionsmittel regeneriert werden müssen.

Darüber hinaus kann die Stickoxidemission durch Rückführung des Abgases in den Verbrennungsraum erniedrigt werden. Dies kann noch verstärkt werden, indem das rückgeführte Abgas durch Verwendung geeigneter Adsorbermaterialien mit $NO_x$ angereichert wird.

Die materialgestützten Entstickungsverfahren setzen für die Reduktionsmitteldosierung und die Adsorptions-/Regenerationszeiten die Kenntnis der last- und drehzahlabhängigen momentanen $NO_x$-Emissionen voraus. Dies kann entweder durch Verwendung eines NO-Sensors oder durch Benutzung von Kennfeldwerten geschehen, die in einem Speicher abgelegt wurden.

$NO_x$-Kennfelder gelten nicht für den individuellen Motor, sondern nur für die Baureihe, so daß herstellungsbedingte Schwankungen im $NO_x$-Rohgasgehalt bei gleichen Kennfeldpunkten vorkommen können. Außerdem kann der momentane Katalysatorzustand (Temperatur, $NO_x$- und Reduktionsmittelbeladung) bei gleichen Kennfeldpunkten verschieden sein. Deshalb wäre eine NO-sensorgesteuerte Regelung vorzuziehen. Unter Verwendung eines NO-Sensors könnte die Abgasrückführungsrate so gesteuert werden, daß in jedem Motorbetriebspunkt eine minimale $NO_x$-Emission auftritt.

Es sind in der Literatur eine Reihe von Sensorprinzipien für die Messung des NO-Gehaltes in Gasen beschrieben. Nur wenige davon sind jedoch für die Bedingungen in heißem Realabgas geeignet.

Prinzipiell bietet die Anwendung von keramischen Festelektrolyten ein hohes Potential für die Anwendung, da sich diese Sensoren durch eine hohe Selektivität, hohe Temperaturbeständigkeit und ein einen geringen Bauaufwand gekennzeichnet sind. Dies zeigt nicht zuletzt der große Erfolg des $\lambda$-Sensors auf Basis von $ZrO_2$ als Sauerstoffionenleiter. Eine Übertragung dieses Prinzips auf NO erfordert einen $NO^+$-Festelektrolyten.

In der **US 5,466,350** ist ein amperometrischer Dünnschicht-Festelektrolyt-Detektor für NO, der auf dem Durchgang von Nitrosoniumkationen ($NO^+$) durch den Festelektrolyten basiert, beschrieben. Dabei werden in einer Bipotentiostatanordnung vier Elektroden benötigt: eine erste und zweite Arbeitselektrode, eine gemeinsame Referenz- und eine gemeinsame Gegenelektrode. Zusätzlich wird eine Diffusionsbarriere vor der als Anode wirkenden Arbeitselektrode verwendet, die dafür sorgt, daß der Sensor unter diffusionskontrollierten Bedingungen arbeitet. Nur so kann gewährleistet werden, daß die Strom-Spannungscharakteristik proportional zur NO-Konzentration im Gas ist.

Als Festelektrolyt wird in der **US 5,466,350** NO-$\beta$-$Al_2O_3$ verwendet, das in zwei Schritten aus Na-$\beta$-$Al_2O_3$ herstellt wird. Zunächst wird das NO-$\beta$-$Al_2O_3$ in einer $AgNO_3$-Schmelze mit $Ag^+$ zu Ag-$\beta$-$Al_2O_3$ ausgetauscht. In einem zweiten Schritt wird Ag-$\beta$-$Al_2O_3$ mit $NO^+$ unter Nutzung von NOCl-Ionen ausgetauscht, so daß letztlich NO-$\beta$-$Al_2O_3$ erhalten wird.

Dieser zweite Schritt erfordert ein Medium, das gleichzeitig eine gute Löslichkeit sowohl für $NO^+$ als auch für $Ag^+$ und eine gute Oxidationsbeständigkeit bei Temperaturen um 200°C besitzt.

Der Stand der Technik nach der **US 5,466,350** hat folgende Nachteile:

- Die Bipotentiostatanordnung benutzt vier Elektroden, was gegenüber einer Zwei-Elektrodenanordnung im Design, in der Herstellung und im Betrieb eine deutlich kompliziertere Anordnung darstellt.

- Damit der Ionenstrom im Festelektrolyten in einem amperometrischen Meßprinzip proportional zur NO-Konzentration in der Gasphase ist, muß eine Diffusionsbarriere integriert werden.

- Das vorgeschlagene amperometrische Sensorprinzip mit Diffusionsbegrenzung ist darüber hinaus prinzipbedingt langsam, da diffusionsabhängig. Auch tritt hier eine Abhängigkeit des Sensorsignals von der Oberflächenqualität (Belegung durch Russpartikel) auf. Dadurch kann in KFZ-Realabgas keine konstante Abhängigkeit von Sensorsignal und NO-Gehalt erreicht werden.

- Prinzipieller Nachteil des amperometrischen Meßprinzips ist zudem die Querempfindlichkeit zu Wasserdampf, der im Abgas in hohen Konzentrationen vorhanden ist. Durch die für die NO-Oxidation anzulegende Spannung von mindestens 1,6 V (Anmerkung.: Literaturwert 1,31 V bezieht sich auf Kalomel-Elektrode) finden an der ersten Arbeitselektrode (Anode) auch Reaktionen mit Wasserdampf statt wie z.B.:

$$2H_2 \rightarrow O_2 + 4H^+ + 4e^- \text{ (1,229 V)}$$

$$2NO + H_2O \rightarrow N_2O_4 + 4H^+ + 4e^- \ (1{,}035\ V)$$

Die gebildeten Protonen werden ebenfalls durch den Elektrolyt transportiert und wie NO an der zweiten Arbeitselektrode, die als Kathode wirkt, reduziert. Der gemessene Strom setzt sich somit aus der Reduktion von $NO^+$ und $H^+$ zusammen.

Im Hinblick auf die Herstellung des $NO^+$-leitenden Festelektrolyten gemäß der **US 5,466,350** sind folgende Nachteile vorhanden:

- Das vorgeschlagene Herstellungsverfahren für den $NO^+$-leitenden Festelektrolyten bedingt das Arbeiten in aggressiven, nicht hydrolysebeständigen Salzschmelzen und wird sehr umständlich in mehreren Schritten durchgeführt. Insbesondere auch die bei Verwendung eine Salzschmelze notwendige Reinigung der Festelektrolyte nach dem Ionenaustausch mit Wasser und Alkohol ist problematisch und kann zur Schädigung des Elektrolyten führen (Hydrolyse von NO zu $HNO_3$). Die Begrenzung auf 190°C (beginnende Zersetzung der NO-Salzschmelze) und den Konzentrationsausgleich in Schmelze und Elektrolyt als einzige Triebkraft macht den vollständigen Ionenaustausch in dichten Schichten von $\beta''$-$Al_2O_3$ unmöglich. Gasdichte dünne Schichten aus reinem $\beta''$-$Al_2O_3$ sind jedoch für eine technische Umsetzung der Ergebnisse für einen schnellen Sensor notwendig.

- Ein prinzipieller Nachteil der Austauschreaktionen in der Schmelze oder in Lösung besteht darin, daß die Triebkraft der Reaktion die Bildung unlöslicher Folgeprodukte, wie AgCl beim Einsatz eines $Ag^+$-Ionenleiter in einer NOCl-haltigen Schmelze darstellt. Aus Voruntersuchungen ist bekannt (R.H. Radzilowski, J.T. Kummer, Inorg. Chem. 8 (1996) 2531; S. Maraun, Diplomarbeit, Universität GH Essen, 1996), daß sich diese unlöslichen Rückstände auf dem Festelektrolyten abscheiden können und somit den Austausch durch Passivierung verhindern. Dies erzwingt, daß möglichst feinpulvrige Ausgangsstoffe eingesetzt werden müssen, die nach dem Austausch zunächst chemisch aufbereitet und zu Formkörpern zu kompaktieren sind. Wie im folgenden noch gezeigt werden wird, können in dem erfindungsgemäßen Verfahren unmittelbar Formkörper der gewünschten Form eingesetzt werden.

- In der US 5,466,350 wurde von Na-$\beta$-$Al_2O_3$ ausgegangen. Na-$\beta$-$Al_2O_3$ weist gegenüber Li-stabilisiertem Na-$\beta''$-$Al_2O_3$ veränderte Schichtfolge und dadurch bedingte geringere Ionenleitfähigkeit auf sowie eine stärkere Hydrolyseempfindlichkeit. Es enthält in der Regel hohe (> 1 %) Anteile von $NaAlO_2$, das für die Hydrolyseempfindlichkeit verantwortlich ist. Ein quantitativ vollständiger Austausch von $Na^+$ gegen $Ag^+$ ist somit nicht möglich. Das verbleibende Na führt zu einer starken Hydrolyseanfälligkeit in Realabgas und dadurch zu einer raschen Zerstörung des Elektrolyten in Realabgas.

Zusammenfassend ergeben sich folgende Nachteile für die Realisierung eines Sensors gemäß der **US 5,466,350**, insbesondere im Hinblick auf für KFZ-Anwendungen:

- kein rein potentiometrisches Messprinzip ($\lambda$-Sensor), daher langsame Gleichgewichtseinstellung und aufwendige Sensortechnik;
- geringe Hydrolysebeständigkeit des Festelektrolyten führt zu Zerstörung bei Betrieb in Realabgas;
- aufwendiges Produktionsverfahren, keine vollständige Umwandlung zu NO-Ionenleiter möglich.

Der Erfindung liegt deshalb die Aufgabe zugrunde, eine Verfahren zum NO-Nachweis in fluiden Medien zu schaffen, mit dem die genannten Nachteile der US 5,466,350 überwunden werden können.

Diese Aufgabe wird mit dem Verfahren nach Anspruch 1 gelöst. Vorteilhafte Ausführungen sowie ein Verfahren zur Herstellung des $NO^+$-leitenden Festelektrolyten sind Gegenstand weiterer Ansprüche.

Das erfindungsgemäße Verfahren umfaßt folgende Verfahrensschritte:

- Positionieren eines nitrosonium($NO^+$)-leitenden Festelektrolyten zwischen zwei porösen Elektroden,
- unmittelbare Beaufschlagung einer der beiden Elektroden mit dem NO-haltigen fluiden Medium, ohne Zwischenschaltung einer Diffusionsbarriere,
- Messen der Spannungsdifferenz zwischen den beiden Elektroden, die ein Maß für die NO-Konzentration in dem NO-haltigen fluiden Medium ist.

Das erfindungsgemäße Verfahren überwindet die Nachteile des Standes der Technik, indem zum NO-Nachweis eine potentiometrische und nicht eine amperometrische Messung vorgenommen wird. Dadurch werden nur zwei Elektroden benötigt. Potentiometrische Sensoren erreichen prinzipiell eine schnelle Signalreaktion, da kein Diffusionsgleichgewicht eingestellt werden muß. Des weiteren ist das Meßsignal unabhängig von Veränderungen der Sensoroberfläche, wie sie typischerweise bei Betrieb in Realabgas auftreten.

Weiterhin kann der $NO^+$-leitende Festelektrolyt anstatt über Ionenaustausch in der Salzschmelze direkt aus der Gasphase erhalten werden. Dies kann in einfachen, gasdichten Reaktoren erfolgen und ist somit auch im großtechnischen Einsatz gut handhabbar.

Das erfindungsgemäße Verfahren kann insbesondere im Abgas sowohl magerals auch $\lambda$=1-betriebener Kraftfahrzeuge zur Bestimmung der momentanen Stickoxidkonzentration eingesetzt werden.

Die Erfindung wird anhand von Fig. näher erläutert. Es zeigen:

- Fig. 1 Spannung des NO-Sensors (NO-$\beta$-$Al_2O_3$) unter stromlosen Bedingungen für verschiedene NO-Konzentrationen (1%, 0,2%,......60 ppm) über der Zeit.
- Fig. 2 Abhängigkeit der Spannung des NO-Sensors von der NO-Konzentration.
- Fig. 3 mehrere Verfahrensvarianten zur Herstellung eines NO-$\beta$"-$Al_2O_3$-Festelektrolyten.
- Fig. 4 Versuchsaufbau zur Herstellung eines NO-leitenden Festelektrolyten mittels Gasphasenaustausch.
- Fig. 5 Zeitlicher Verlauf von Spannung und Stromstärke beim Einbau von $NO^+$ in den Festelektrolyten während des Gasphasenaustauschs.

**Sensoraufbau und Prinzip des NO-Nachweis**

Für den Sensoraufbau geht man vorteilhaft von einer gasdichten (>98% der theoretischen Dichte) dünner Scheibe aus Li-stabilisiertem Ag-$\beta$"-$Al_2O_3$ mit einer Dicke von z.B. 200 $\mu$m aus. Diese Scheibe wird mit Hilfe einer Verbindungsschicht (z.B. Glaslot) auf einem metallisierten Keramiksockel aufgebracht. Die Verbindung geschieht in einem Lötprozess bei maximal 1000°C abhängig vom gewählten Glaslot. Die Verbindung zum Sockel muß gasdicht und nichtleitend sein. Als Elektroden kommen Pasten, CVD- oder PVD-Schichten in Betracht. Die Schichten sollen von geringer Dicke sein und eine schnelle Gasdiffusion zur Elektrolytoberfläche ermöglichen. Das Elektrodenmaterial kann insbesondere Graphit, Edelmetall oder elektronisch leitfähige Keramik sein. Die Kontaktierung kann über Edelmetallkontakte erfolgen.

Bei Anwendung des $Ag^+$ gegen $Na^+$ Ionenaustausches in einer Ag-Schmelze übernimmt das auf der Kathode abgeschiedene bzw. auf der Anode verbleibende Silber die Funktion der Elektrode.

Testgas (Abgas) und Luft werden durch eine gasdichte Schicht (Formkörper) eines $NO^+$-leitenden Festelektrolyten getrennt (Fig. 4). An den auf beiden Seiten befindlichen porösen Elektrolyten (vorzugsweise Platin) findet die Redox-Reaktion NO <-> $NO^+$ statt und erzwingt ein durch den Konzentrationsgradienten bestimmtes Potential zwischen den Elektroden. Das Potential ist direkt abhängig vom Konzentrationsunterschied der beiden Seiten, das heißt bei Ver-Wendung von Luft als Referenz proportional zur NO-Konzentration im Abgas. Im Gegensatz zum NO-Sensor nach der **US 5,466,350**, der amperometrisch betrieben werden muß, ist das hier beschriebene Funktionsprinzip rein potentiometrisch und entspricht dem der $\lambda$-Sonde mit seinen bekannten Vorteilen.

Am Beispiel von NO-$\beta$-$Al_2O_3$ ist in Fig. 1 gezeigt, daß bereits 60 ppm NO im Abgas eine gut meßbare Spannung liefern. Darüber hinaus zeigt Fig. 2, daß in dem für den Einsatz als Abgassensor relevanten Konzentrationsbereich von 0-2000 ppm NO die größten Spannungsänderungen mit der Konzentration auftreten.

Unterscheiden sich die Gase zu beiden Seiten des Elektrolyten hinsichtlich ihrer NO-Konzentration, so resultiert daraus nach dem Nernst'schen Gesetz eine Potentialdifferenz zwischen den zwei Elektroden:

$$U = (R \times T)/F \times \ln(pNO,\ Meßgas\ /\ pNO,\ Referenz)$$

mit

R = Gaskonstante
T = Temperatur in Kelvin
F = Faraday-Konstante.

Diese Potentialdifferenz setzt sich zusammen aus den beiden Standardpotentialen, die sich an der Anode durch den Konzentrationsunterschied zwischen NO im Meßgas und $NO^+$ im Festelektrolyten und an der Kathode zwischen der Konzentration von NO in der Referenz und $NO^+$ im Festelektrolyten ergeben. Im Gegensatz zum amperometrisch betriebenen Sensor braucht für den Meßeffekt eines potentiometrischen Sensors das NO an der Anode nicht zu $NO^+$ oxidiert und an der Kathode zu NO reduziert werden.

Durch die Wahl des NO-Partialdrucks auf der Referenzgas-Seite können sowohl der Meßbereich als auch die Empfindlichkeit des Sensors an die Erfordernisse angepasst werden. Ist der NO-Partialdruck im Referenzgas größer als im Meßgas, so verläuft die Signalkurve sehr steil, bei kleinerem Partialdruck flacher.

Da die Spannungen auch von der Temperatur abhängt, muß bei schwankender Temperatur eine elektronische Kompensation über ein Thermoelement durchgeführt werden.

Eine Diffusionsbarriere ist nicht erforderlich, da an den Elektroden keine Umsetzung von NO stattfindet und somit die Diffusion zur Elektrode keine Rolle spielt. Daher ist der Sensor auch unempfindlich gegen schwankende Gasgeschwindigkeiten.

**Herstellung des $NO^+$-leitenden Festelektrolyten**

Fig. 3 zeigt verschiedene vorteilhafte Verfahrensvarianten zur Herstellung eines NO-β"-$Al_2O_3$-Festelektrolyten mit Na-β"-$Al_2O_3$ als beispielhaftem Ausgangsmaterial.

1. Schritt: Ionenaustausch $Ag^+$ gegen $Na^+$ in einer $AgNO_3$-Schmelze bei ca. 300° C oder mittels Anodenbeschichtung mit Silberpaste bei angelegter Spannung und ca. 1000°C.
2. Schritt: Ionenaustausch $NO^+$ gegen $Ag^+$ in der Gasphase bei angelegter Spannung und ca. 300 °C.

Besonders vorteilhaft erweist sich die Verwendung von Li-stabilisiertem β"-$Al_2O_3$ mit einem $NaAlO_2$-Gehalt < 0,5 Gewichts-%. Dadurch wird die Leitfähigkeit und Hydrolysebeständigkeit gegenüber Na-β-$Al_2O_3$ signifikant verbessert (J.L. Sudworth, A.R. Tilley, The Sodium Sulfur Battery, Chapmann and Hall 1985, p. 20-56).

Es wird damit auch ein Austauschgrad von > 99% beim Ionenaustausch $Na^+$ gegen $Ag^+$ in der $AgNO_3$-Schmelze erreicht. Dadurch wird die Hydrolyseempfindlichkeit des Sensors entscheidend verbessert, da im ausgetauschten Elektrolyten nur noch Spuren von Natrium bzw. $NaAlO_2$ enthalten sind.

Zur Vermeidung des $Ag^+$ gegen $Na^+$ Ionenaustausches in der Schmelze kann der Festelektrolyt nach dem Sensoraufbau auch auf der Anode mit einer Silberpaste beschichtet werden. Bei Erreichen der Schmelztemperatur von Ag (961°C) wird bei Anlegung einer ausreichend hohen Spannung zwischen Anode und Kathode ein Stromfluß gemessen, der auf den Ionenaustausch $Ag^+$ gegen $Na^+$ zurückzuführen ist. Dieser Austausch sollte auf Anoden- und Kathodenseite unter Inertgas stattfinden.

Der Elektrolyt kann vor dem Ionenaustausch von eventuellen - den Ionenaustausch hemmenden - Deckschichten befreit werden (NaOH und $Na_2CO_3$), indem vor Anlegen der Spannung der Elektrolyt auf über 850°C erhitzt wird.

Für den Ionenaustausch $Ag^+$ gegen $NO^+$ in der Gasphase wird der Sensoraufbau auf 300°C erhitzt und anodenseitig mit einem NO-haltigen Trägergas beaufschlagt. Bei Anlegung einer ausreichend hohen Spannung zwischen Anode und Kathode wird ein Stromfluß gemessen, der auf den Ionenaustausch $NO^+$ gegen $Ag^+$ zurückzuführen ist. Eine Schädigung des Elektrolyten durch eine Reinigung in $H_2O$ findet nicht statt, da keine Salzschmelze entfernt werden muß. Das kathodisch abgeschiedene metallische Silber kann als Elektrode auf der Elektrolytoberfläche verbleiben.

Ausführungsbeispiel: Gasphasenaustausch des Festelektrolyten

Ein vollständiger Ag-β"-$Al_2O_3$-Festelektrolyt 2 wird beidseitig mit Elektroden 1,3 kontaktiert und derart in eine gasdichte Kammer eingebaut, daß sie nur auf einer Seite NO-haltigem Trägergas ausgesetzt ist, wie Fig. 4 zeigt. Die Membran wird über den Gasstrom auf mindestens 300°C beheizt, um eine ausreichende Ionenleitfähigkeit des Elektrolyten zu erreichen. Die NO-zugewandte Elektrode wird als Anode geschaltet wogegen die Kathode von Luft umgeben ist.

Fig. 5 stellt den zeitlichen Verlauf von Strom und Spannung während des Ionenaustausches dar. Es wird eine Spannung angelegt, die langsam gesteigert wird Beim Erreichen des Redoxpotentials von $NO/NO^+$ fließt ein Strom, der mit der Spannung zunimmt. Aufgrund von Polarisation wird der Strom bei konstanter Spannung etwas kleiner.

Der Stromfluß geht bei konstanter Spannung nach dem Abschalten von NO schnell zurück und ist nach dem Zuschalten von NO wieder vorhanden. Damit ist der Stromfluß eindeutig auf folgende Vorgänge zurückzuführen:

1. Oxidation von NO zu $NO^+$ an der Anode.
2. Transport von $NO^+$ durch den Elektrolyt (Ionenaustausch).
3. Reduktion von $NO^+$ zu NO an der Kathode.

Da der Elektrolyt zu Beginn vollständig mit $Ag^+$ beladen war, muß somit ein Ionenaustausch von $NO^+$ gegen $Ag^+$ stattgefunden haben.

Durch Berechnung der benötigten Stoffmenge für eine beliebigen Austausch von $M^+$ durch $NO^+$ läßt sich die Elektrolysedauer unmittelbar feststellen, das heißt die Elektrolysedauer bestimmt direkt den Austauschgrad (Prinzip der Pumpzelle). Da sich elementares Metall oder entsprechende Oxide/Hydroxide bei der Elektrolyse an der Arbeitselektrode abscheidet, kann der Einbau von $NO^+$ neben der Strom/Zeitmessung auch gravimetrisch verfolgt werden, was eine weitere Analyse erübrigt.

Vorteilhaft zu verwendende Gase und Festelektrolyten für den Gasphasenaustausch

Als Gasphase eignet sich reines NO sowie sauerstofffreie NO-haltige Trägergase oder Gasgemische.

Als Vorstufen für $NO^+$-ausgetauschte Festelektrolyte eignen sich wasserfreie, kationenleitende Festkörper. Dazu zählen:

- Me-$\beta$-$Al_2O_3$, mit Me = $Li^+$, $Na^+$, $K^+$, $Rb^+$, $NH_4^+$, $Ag^+$
- Me-$\beta$"-$Al_2O_3$, mit Me = $Li^+$, $Na^+$, $K^+$, $Rb^+$, $NH_4^+$, $Ag^+$
- $\beta$-Ferrite ($Fe_2O_3$)
- $\alpha$-Corundum Sodalithe
- natürliche und synthetische Schichtsilikate
- Oxidische Gerüststrukturen in Pyrochlor- oder Defektpyrochlorstruktur der allgemeinen Form $AB0_3$, mit A = einwertige Kationen und B = Sb, Nb, W, Ta, sowie Kombinationen dieser Elemente mit B = NbTa
- Zeolithe, zeolithverwandte Gerüststrukturen wie AIPOs oder SAPOs sowie mesoporöse Metalloxide
- Hydratisiertes $V_2O_5$
- Vanadate und Phosphate
- Scheelite z.B. $Ca_{1-x}Ag_xWO_4$
- Argyrodite $Ag_xMX_6$ (x=7-9, M=Metall; X=S, Se, Te) z.B. $Ag_7TaS_6$, $Ag_9GaSe_6$

**Patentansprüche**

1. Verfahren zum selektiven Nachweis von NO in fluiden Medien, insbesondere Abgasen von Verbrennungsmotoren, mit den Verfahrensschritten:

   - Positionieren eines nitrosonium-leitenden Festelektrolyten zwischen zwei porösen Elektroden,
   - unmittelbare Beaufschlagung einer der beiden Elektroden mit dem NO-haltigen fluiden Medium,
   - Messen der Spannungsdifferenz zwischen den beiden Elektroden, die ein Maß für die NO-Konzentration in dem NO-haltigen fluiden Medium ist.

2. Verfahren nach Anspruch 1, **dadurch gekennzeichnet**, daß als Festelektrolyt NO-$\beta$-$Al_2O_3$ verwendet wird.

3. Verfahren nach Anspruch 1, **dadurch gekennzeichnet**, daß als Festelektrolyt NO-$\beta$"-$Al_2O_3$ verwendet wird.

4. Verfahren nach Anspruch 3, **dadurch gekennzeichnet**, daß der Festelektrolyt Li-stabilisiert ist.

5. Verfahren nach Anspruch 4, **dadurch gekennzeichnet**, daß der Elektrolyt gasdicht ist, eine Schichtdicke von < 200 $\mu$m, eine maximale Kristallitgröße von 40 $\mu$m und einen Ionenleitfähigkeitswiderstand von $Na^+$ von < 5 $\Omega$ cm aufweist.

6. Verfahren nach einem der vorangehenden Ansprüche, **dadurch gekennzeichnet**, daß als Elektrodenmaterial ein Metall, Halbmetall, Halbleiter oder ein kohlenstoffhaltiger Leiter verwendet wird.

7. Verfahren nach einem der vorangehenden Ansprüche, **dadurch gekennzeichnet**, daß als Elektrodenmaterial NO-$\beta$-$Al_2O_3$ verwendet wird.

8. Verfahren zur Herstellung eines Festelektrolyten zur Verwendung in einem Verfahren nach einem der vorangehenden Ansprüche, **gekennzeichnet durch** Anwendung eines $NO^+$-gegen-$Ag^+$-Austausches in der Gasphase auf einem kationenleitenden Festkörper als Vorstufe.

9. Verfahren zur Herstellung nach Anspruch 8, **dadurch gekennzeichnet**, daß die Vorstufe eine der folgenden Verbindungen ist:

   - Me-$\beta$-$Al_2O_3$, mit Me = $Li^+$, $Na^+$, $K^+$, $Rb^+$, $NH_4^+$, $Ag^+$
   - Me-$\beta$"-$Al_2O_3$, mit Me = $Li^+$, $Na^+$, $K^+$, $Rb^+$, $NH_4^+$, $Ag^+$
   - Li-stabilisiertes $\beta$"-$Al_2O_3$, wobei der Lithiumoxidgehalt zwischen 0,6 bis 1,0 Gewichts-% liegt und der Natriumoxid-Gehalt zwischen 8,0 und 10,0 Gewichts-% liegt
   - $\beta$-Ferrite ($Fe_2O_3$)
   - $\alpha$-Corundum

- Sodalithe
- natürliche und synthetische Schichtsilikate
- Oxidische Gerüststrukturen in Pyrochlor- oder Defektpyrochlorstrukturder allgemeinen Form AB03, mit A = einwertige Kationen und B = Sb, Nb, W, Ta, sowie Kombinationen dieser Elemente mit B = NbTa
- Zeolithe, zeolithverwandte Gerüststrukturen wie AIPOs oder SAPOs sowie mesoporöse Metalloxide
- Hydratisiertes $V_2O_5$
- Vanadate und Phosphate
- Scheelite z.B. $Ca_{1-x}Ag_xWO_4$
- Argyrodite $Ag_xMX_6$ (x=7-9, M=Metall; X=S, Se, Te) z.B. $Ag_7TaS_6$, $Ag_9GaSe_6$.

Fig. 1

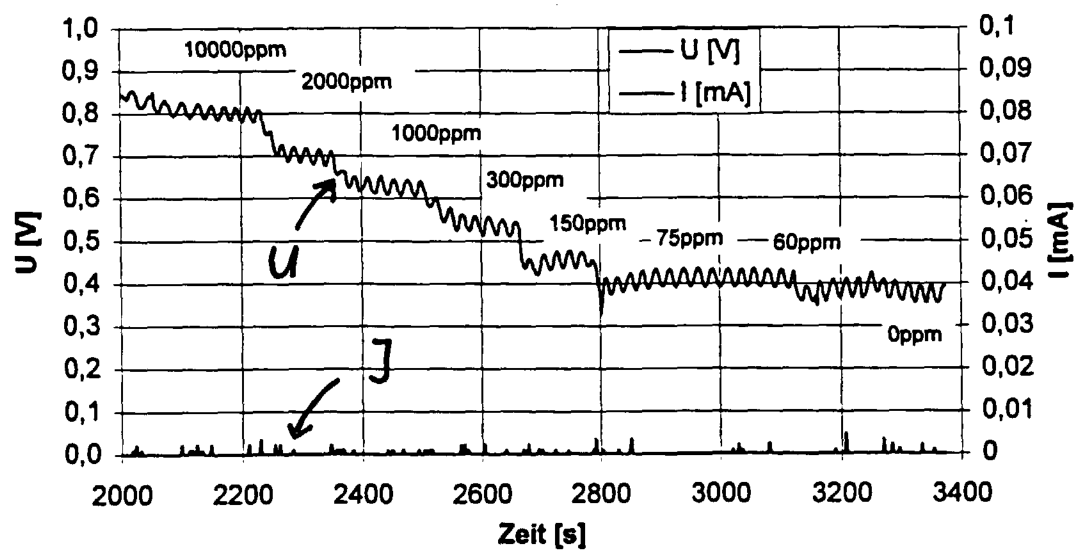
1,0
0,9
0,8
0,7
0,6
0,5
0,4
0,3
0,2
0,1
0,0
U [V]
0,1
0,09
0,08
0,07
0,06
0,05
0,04
0,03
0,02
0,01
0
I [mA]
10000ppm
2000ppm
1000ppm
300ppm
150ppm
75ppm
60ppm
0ppm
U [V]
I [mA]
U
J
2000
2200
2400
2600
2800
3000
3200
3400
Zeit [s]

Fig. 2

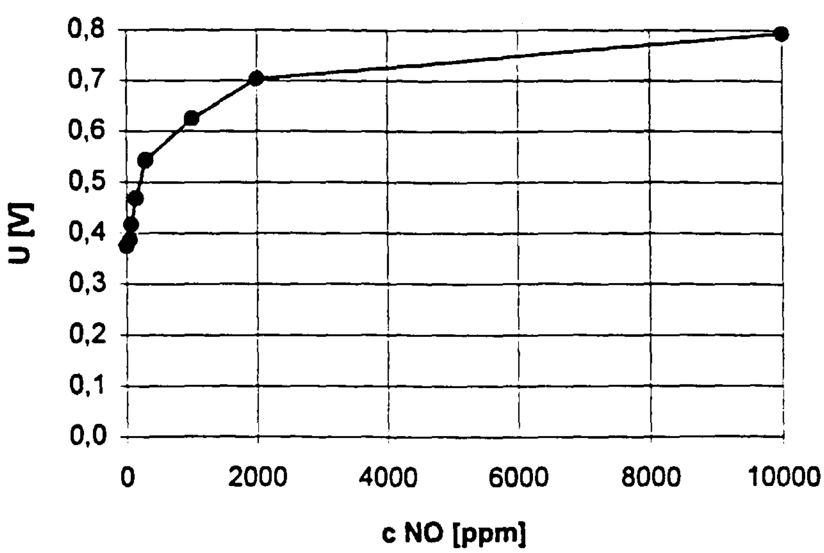
0,8
0,7
0,6
0,5
0,4
0,3
0,2
0,1
0,0
U [V]
0
2000
4000
6000
8000
10000
c NO [ppm]

Fig. 3

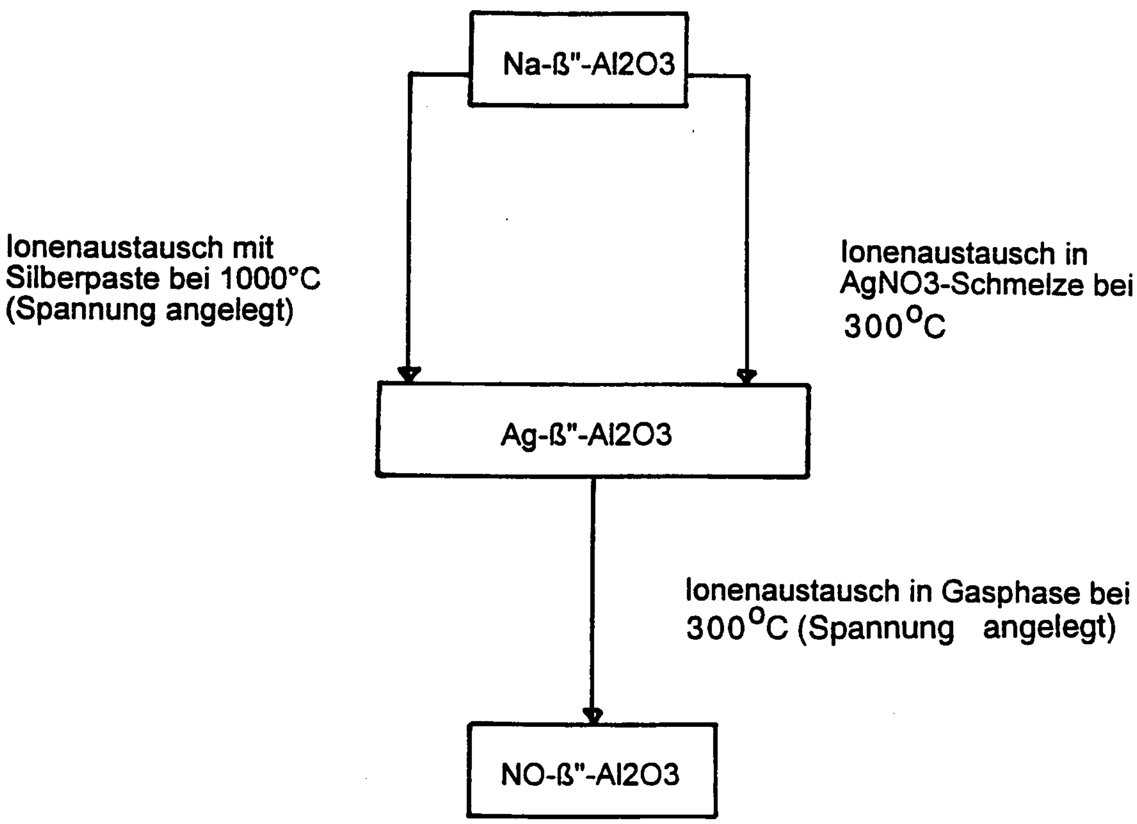
Na-ß"-Al2O3
Ionenaustausch mit Silberpaste bei 1000°C (Spannung angelegt)
Ionenaustausch in AgNO3-Schmelze bei 300°C
Ag-ß"-Al2O3
Ionenaustausch in Gasphase bei 300°C (Spannung angelegt)
NO-ß"-Al2O3

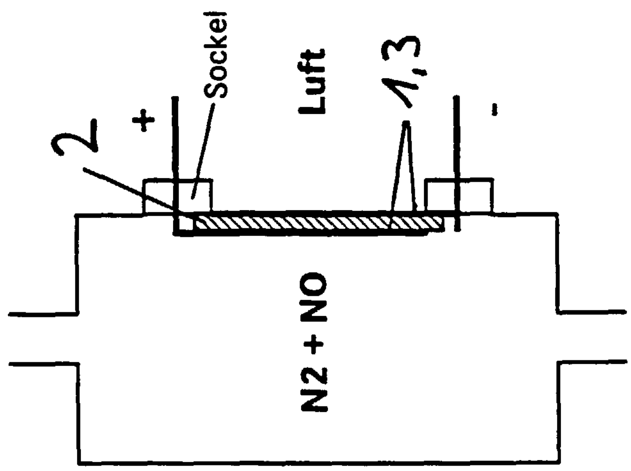


Fig. 4

Fig. 5

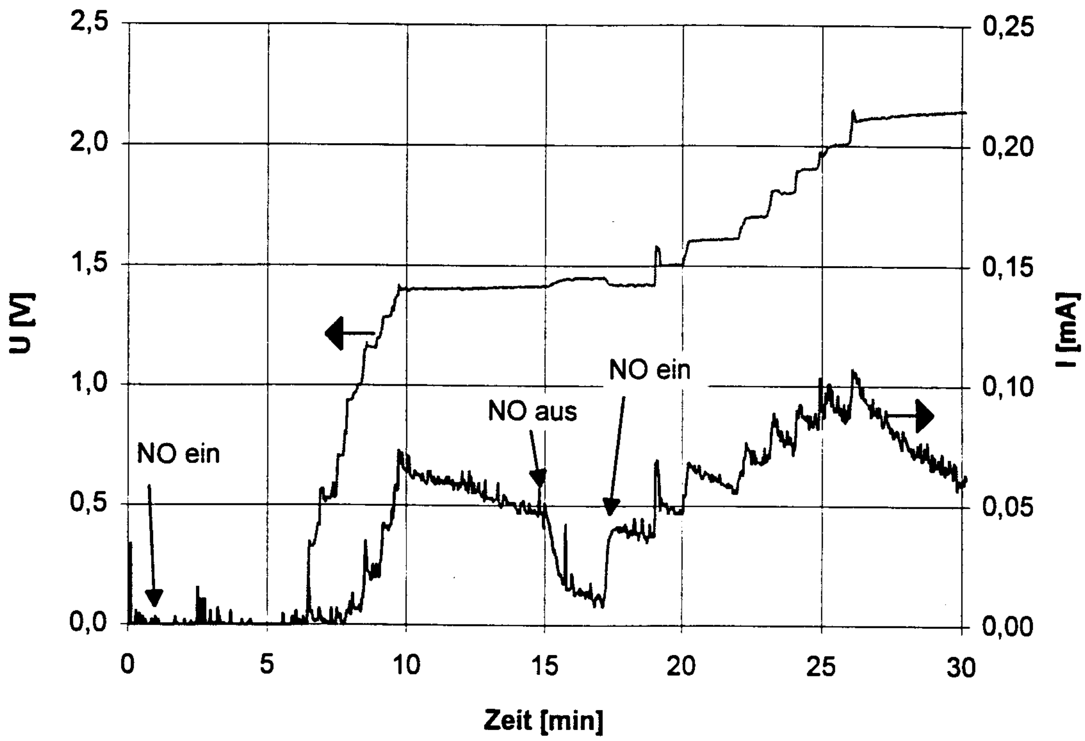
2,5
2,0
1,5
1,0
0,5
0,0
U [V]
0,25
0,20
0,15
0,10
0,05
0,00
I [mA]
NO ein
NO aus
NO ein
0
5
10
15
20
25
30
Zeit [min]